Europäisches Patentamt

European Patent Office

Office européen des brevets

(11) Publication number: 0 390 383
A1

# EUROPEAN PATENT APPLICATION

(21) Application number: 90302876.9

(22) Date of filing: 16.03.90

(51) Int. Cl.⁵: **D06M 11/73, C04B 41/81, C03C 25/02, D02G 3/16, A62B 17/00, A41D 13/10, D01F 9/10, C04B 35/14**

(30) Priority: 31.03.89 US 332018

(43) Date of publication of application:
03.10.90 Bulletin 90/40

(84) Designated Contracting States:
DE FR GB IT

(71) Applicant: MINNESOTA MINING AND
MANUFACTURING COMPANY
3M Center, P.O. Box 33427
St. Paul Minnesota 55133-3427(US)

(72) Inventor: Tompkins, Thomas L., c/o Minnesota
Mining and
Manufac. Comp., 2501 Hudson Road, P.O.
Box 33427
St. Paul, Minnesota 55133-3427(US)
Inventor: Wirth, Bernard T., c/o Minnesota
Mining and
Manufac. Comp., 2501 Hudson Road, P.O.
Box 33427
St. Paul, Minnesota 55133-3427(US)

(74) Representative: Baillie, Iain Cameron et al
c/o Ladas & Parry Isartorplatz 5
D-8000 München 2(DE)

(54) Carbon-coated ceramic textiles.

(57) A textile of ceramic fibers (10) is stronger and more resistant to abrasion when each of its fibers (10) has a uniform coating of elemental carbon that is substantially free from metal. That uniform coating is applied to the ceramic fibers (10) by uniformly coating each fiber with a solution of an organic lubricious sizing material (18), forming a textile of the sized fibers (10), and heating the textile in an inert atmosphere to decompose the organic sizing (18) to and leave a uniform coating of elemental carbon on each fiber (10). The uniform coating of elemental carbon on each fiber (10) permits the ceramic textiles to be fabricated into a variety of articles such as high-temperature mittens or gloves.

# CARBON-COATED CERAMIC TEXTILES

## Background of the Invention

### Field of the Invention

The invention concerns ceramic textiles such as fabrics which can be woven from aluminum borosilicate yarn, and also concerns other ceramic textiles such as sewing thread and braid. The invention is specifically concerned with articles of commerce made of such textiles, e.g., insulated gloves which can be worn to permit objects to be handled at very high temperatures.

### Description of the Related Art

U.S. Pat. No. 3,795,524 (Sowman) discloses a process of making ceramic monofilaments or fibers and other shaped articles from either an aqueous solution of water-soluble aluminum and boron compounds or a colloidal dispersion of silica and water-soluble or dispersible aluminum compounds and boron compounds. Such a solution or dispersion is often called an "organosol" or a "sol-gel". In most of Sowman's examples, the fibers are fired as produced, but it is suggested that when the green fibers are brought into contact to form a strand of multi-fibers, "the strand can be sized to hold the fibers together without sticking. Where a size is used, the strand (or extruded fibers) can be mechanically drawn over a size applicator, like that used in the textile industry, and a conventional heat fugitive size or lubricant, such as an oil, applied. Heat lamps or the like can be used to volatilize the size to avoid combustion of the size when the green articles are fired, such combustion tending to cause overheating of the articles (i.e., the temperature and rate of temperature rise caused by combustion may be higher than desired)" (col. 6, ls. 36-47).

Fabric of ceramic fibers made as taught by Sowman is resistant to exceedingly high temperatures and has been sold for more than ten years under the registered trademark "Nextel" by the company to which this application is assigned. Uses to which this fabric has been put include thermal shields for space craft and fire barriers, e.g., fire-resistant protective coverings for composites of graphite fibers and resin, especially in aircraft. It also has been used as furnace curtains and furnace belts.

Such fabrics of ceramic fibers have been tried as the outer shell of insulated mittens for handling exceedingly hot objects, but their resistance to abrasion is not appreciably better than that of glass fabrics that are much cheaper. Now that asbestos can no longer be used, most such mittens currently have an outer shell of glass fibers, even though they wear out quickly and may need to be replaced within a few hours. Frequent replacement is not only expensive, but can involve special disposal problems.

U.S. Pat. No. 4,752,504 (Rickborn) converts a "Nextel" fabric of ceramic fibers into electrically conductive cloth by depositing a carbonaceous film. In Rickborn's Example 1, the ceramic fabric was sprayed with a solution containing poly(styrene) and pulled through a 900°C hot zone in a nitrogen atmosphere to leave the fabric with a coating of carbonaceous film (elemental carbon). While none of Rickborn's examples describes chemical vapor deposition, Examples 1 and 2 of U.S. Pat. No. 4,722,860 (Doljack et al.) utilize chemical vapor deposition of zinc phthalocyanine to form a coating on a fabric of ceramic fibers, which coating is converted to a carbonaceous film containing zinc.

Another patent that teaches applying organic coatings to ceramic objects and heating in an inert atmosphere to leave a carbon coating is U.S. Pat. No. 3,854,979 (Rossi). It obtains a glassy carbon glaze on ceramic surgical implants that enables the formation of a seal to prevent invasion by bacteria and leakage of body fluids.

U.S. Pat. No. 4,510,077 (Elton) creates coatings of elemental carbon on glass fibers to make them semiconducting. In Example 4, glass fibers containing about 2.1% by weight starch and oil sizing are chopped and then heated in a vacuum at 700°C to convert the sizing to a carbon coating.

Each of U.S. Pats. No. 4,430,851 (Sundet) and 4,375,779 (Fischer) discloses sewing thread made of yarn of ceramic monofilaments or fibers, which sewing thread has sufficient strength and flexibility to undergo the rigors of machine sewing. Each yarn of the sewing thread has a serving such as rayon that protects the yarn during the sewing process and is burned off after the sewing has been completed.

## Summary of the Invention

The invention provides ceramic textiles such as fabric or sewing thread that are stronger and much more resistant to abrasion than are prior ceramic textiles. Briefly, a textile of the invention is made of ceramic monofilaments (here usually called "fibers"), each of which has a uniform coating of elemental carbon that is substantially free from metal. That uniform coating preferably is applied by the sequential steps of

a) continuously spinning ceramic or fibers from an organosol or sol-gel like those of the Sowman patent,

b) firing the fibers,

c) promptly coating the fibers (preferably by coating a roving of the fibers) with a solution of an organic lubricious sizing material which is substantially free from metallic elements,

d) drying the coating to leave a lubricious sizing,

e) converting the sized fibers into a textile, and

f) heating the textile in an inert atmosphere to decompose the organic sizing to leave a uniform coating of elemental carbon on each fiber.

The resulting textile differs from the fabrics of Rickborn and Doljack, because when they coat a fabric instead of the fibers, they do not obtain a uniform coating of elemental carbon on each fiber. Microscopic examination of the elemental carbon coating of the novel textile suggests that it is amorphous, but this has not been verified.

For the carbon coating to be fully effective, it should cover each fiber where it rubs against adjacent fibers. This would not be possible in the Rickborn and Doljack fabrics, because the carbon coatings there obtained by spraying, dip-coating, or vapor deposition onto a the fabric would not uniformly cover the individual fibers of the fabric.

Furthermore, some of the Rickborn and Doljack carbon coatings contain metal which could be converted to metal oxides at high temperatures to which a ceramic textile would be put to achieve important objectives of the present invention, such as in high-temperature mittens. Any such metal oxides would tend to fuse to the ceramic fibers of the textile, thus making the textile brittle and lowering the temperature at which the textile is useful.

Testing reported below demonstrates that the carbon coated ceramic textiles of the invention have significantly better tensile strength and far greater abrasion resistance than do ceramic textiles which are identical except omitting the elemental carbon coating. It is surmised that these improvements are realized because the carbon coating prevents the ceramic cores of adjacent fibers from touching and scratching each other, and that the poor abrasion resistance of prior ceramic textiles has been due to the breaking of individual fibers as a result of such scratching when the textile has been flexed.

Persons who have used textiles of the invention for making articles such as high-temperature mittens have been able to do so without experiencing any skin irritation. This stands in contrast to ceramic textiles of the prior art such as "Nextel" ceramic fabrics which can cause skin irritation like that caused by glass fibers, especially when the "Nextel" fabric has no sizing. The skin irritation caused by "Nextel" fabric is attributable to small lengths of the ceramic fibers that are broken off when the fabric is flexed. It is surprising that such a thin carbon coating may eliminate this problem.

## Detailed Disclosure

The individual fibers of the ceramic textiles of the invention preferably are 5-20 $\mu$m in diameter, as are individual fibers of the aforementioned "Nextel" fabrics. If they were of substantially larger diameter, the textiles would be less flexible and hence more likely to break when flexed. On the other hand, it is difficult to make continuous fibers at diameters smaller than 5 $\mu$m.

The ceramic textiles of the invention preferably are made from yarns made by twisting together a plurality of rovings, each of which contains from 100 to 1000 fibers, more preferably 300-800. A yarn for a woven fabric of the invention preferably is made from 2 or 3 rovings, while a sewing thread of the invention preferably includes about 6 to 10 rovings, each having first been served with at least one organic fiber as taught in the Sundet patent.

The organosol or sol-gel from which the ceramic monofilaments or fibers can be spun in step a) of the above-outlined method can be made from a variety of metal oxides, preferably a mixture containing

precursors of $Al_2O_3$, $B_2O_3$, and $SiO_2$. Preferably the organosol, after being fired, has an alumina:boria mol ratio of from 9:2 to 6:3 and up to 65 weight percent silica, preferably 20 to 50 weight percent silica, as described in the Sowman patent. Other ceramic fibers which should be useful are inorganic refractory fibers described at col. 3, ls. 21-29 of the Fischer patent, which disclosure is incorporated herein by reference.

Step c) of the above-outlined method should promptly follow the firing step, because any contact between the uncoated fibers could cause them to abrade each other. To minimize any such abrasion, the organic sizing material that is applied in step c) should be lubricious after being dried in step d). The sizing also should be free from metal so that the fibers, after the heating step f), have a coating of elemental carbon that is substantially free from metal, thus avoiding the above-mentioned problems that metal oxides would create. Among preferred sizing materials are poly(ethylene glycol), starch and oil, and poly(vinyl alcohol).

The amount of organic sizing material that is applied in step c) preferably provides a dry coating which is about 2-3% of the weight of the ceramic fibers. If a substantially thicker coating were applied, the sizing might be undesirably sticky and might leave deposits on guides, e.g., eyelets, across which the fibers are drawn while being converted into textiles. If the sizing were substantially less than 2% dry weight, the fibers might not be adequately lubricious to avoid being broken while being formed into textiles.

When the organic sizing material is from 2 to 2.5% dry weight, the weight of the elemental carbon coating after the heating step f) is typically about 0.25 to 0.4% that of the ceramic fibers. This usually is sufficient to provide a carbon-coated ceramic textile that has the desired degree of strength and abrasion resistance. However, where a greater thickness of elemental carbon is desired, additional metal-free organic material can be applied to the textile subsequent to step f) followed by again heating in an inert atmosphere. Preferably that additional application is carried out prior to step f), so that the textile needs to be heated only once in an inert atmosphere. Whether applied before or after step f), the added elemental carbon is primarily at the surface of the textile, thus enhancing resistance to surface abrasion, and may not increase the carbon barrier between individual fibers of the textile, thus not helping to counteract the effects of chafing between adjacent fibers when the textile is flexed.

A preferred inert atmosphere for step f) is nitrogen because of its low cost and noncombustibility. Among other useful inert atmospheres are argon, forming gas, hydrogen, and a vacuum.

The textile preferably is heated in step f) to a temperature that is sufficient to drive off organic matter but not so high as to alter the crystalline structure of the ceramic fibers, because this would weaken the fibers. Usually a temperature of $600°C$ is sufficient to drive off organic matter quickly, and the temperature can be as high as $800°C$ without effecting any such crystalline change.

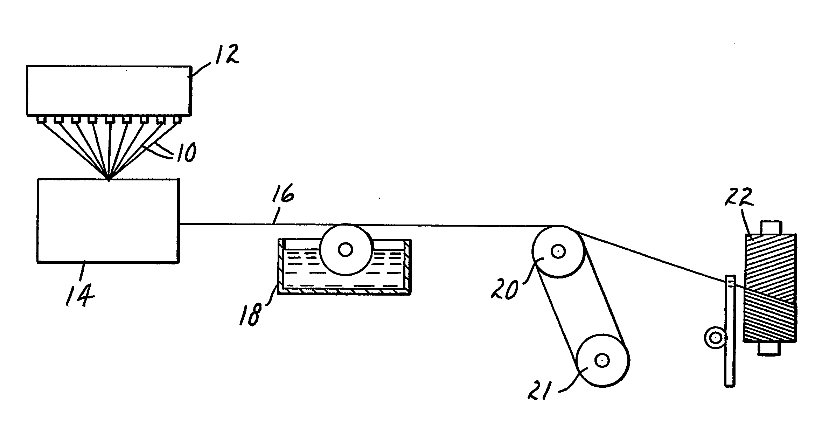

## The Drawing

The invention may be more easily understood in reference to the drawing, the single figure of which is a schematic representation of apparatus for applying a sizing to ceramic fibers as a first step of making a textile of the invention.

In the drawing, several hundred fibers 10 are drawn from an organosol bath 12 and through a firing furnace 14 to make them ceramic. The ceramic fibers are quickly cooled by passing through air and are drawn together into a roving 16 which is sized at a coating tray 18 before the individual fibers are allowed to scrape against each other. The roving makes a number of passes over a pair of hot cans 20 and 21 to dry the sizing, after which the sized roving is wound upon a winder 22 for temporary storage.

The conversion of a sized roving is described in the examples wherein all parts are given by weight.

## Example 1

An organic sizing solution was prepared as follows. To 90 parts of deionized water in a paddle-type mixer were added 8 parts of poly(ethyleneimine) with agitation. After the solution was clear, 2 parts of poly-(ethyleneglycol) of 200 average molecular weight were added with continued mixing until clear.

Fibers were drawn through spinnerets from an organosol of a mixture containing precursors of $Al_2O_3$, $B_2O_3$, and $SiO_2$ having a mol ratio of 3:1:2, respectively. About 390 fibers were combined into a 900-denier roving to which an aqueous solution of sizing was applied while the roving was carried at a speed of 61 m/min. through a groove in a counter-rotating coating roll. The roving was then repeatedly drawn around two hot cans, the surface temperature of which was maintained at 130° C to drive off water, leaving a sizing coating having 2.25% of the weight of the roving.

Two of these rovings were twisted into a 1/2 yarn with 1.1 twists/cm Z-direction. The yarn was woven into a plain weave fabric with 8.9 yarns/cm in the warp direction and 6.7 yarns/cm in the fill direction.

A piece of the fabric about 3 m in length and 0.76 m in width was rolled up and placed in a gas-circulating furnace which then was ramped up from room temperature to 700° C in 5 hours, held at 700° C for one hour, and cooled to room temperature over a period of 16 hours while maintaining a nitrogen atmosphere throughout the cycle. The resulting fabric was dark in color, and carbon analysis indicated that it had an elemented carbon coating that was 0.3% of the weight of the fabric.

Breaking strength in tension and Stoll abrasion resistance were run on the fabric in comparison to an identical fabric ("Control-1") except that it had been heated to 700° C in air instead of in nitrogen. Strips 2.54 cm in width were tested with results reported in Table I.

Table I

|  | Breaking Strength | Stoll Abrasion |
|---|---|---|
|  | (ASTM D-1682) | (ASTM D-3885) |
| Fabric Sample | (N/cm) | (cycles to failure) |
| Fabric of Example 1 Control-1 | 380 152 | 26,009 717 |

Examples 2-4

Fabrics were made as in Example 1 except as indicated in Table II, and the yarn from which the fabric of Example 2 was made had been served with rayon.

Table II

| Ex. | fibers per roving | denier | twists per cm | weave style | warp yarns/cm | fill yarns/cm |
|---|---|---|---|---|---|---|
| 2 | 390 | 600 | 0 | 5 harness | 19 | 18 |
| 3 | 780 | 1800 | 0.59 | crowfoot | 7 | 7 |
| 4 | 780 | 1800 | 1.57 | double-layer | 16 | 8 |

Testing of the fabrics of Examples 2-4 is reported in Table III together with tests on identical fabrics (Control-2, -3, and -4) except having been heated to 700° C in air.

Table III

|  | Breaking Strength | Stoll Abrasion |
|---|---|---|
| Example | (N/cm) | (cycles to failure) |
| 2 | 300 | 271,000 |
| Control-2 | 163 | Not tested |
| 3 | 555 | 137,000 |
| Control-3 | 273 | 913 |
| 4 | 720 | >300,000* |
| Control-4 | 214 | 1,524 |

*Test discontinued before failure

The fabrics of Example 4 and Control-4 were sent to a manufacturer of high-temperature mittens with an order to convert each into mittens. The sewing machine operator found it impossible to fabricate a mitten with the Control-4 fabric due to fiber damage on sewing. The fibers fractured and the seams pulled apart. The carbon coated fabric of Example 4 produced a usable mitten with minimal fabric damage. The operator complained of skin irritation caused by the Control-4 fabric during sewing. The fractured fibers embedded themselves in the operator's skin and caused reddening and irritation similar to a rash. None of this irritation was observed when sewing the mitten with the carbon coated fabric of Example 4. Examination of this mitten showed that it would have good resistance to the abrasion to which it would be exposed in ordinary uses. It should have a longer useful life than can presently be attained when the outer shell is either a ceramic or a glass fabric of the prior art.

## Example 5

(sewing thread)

A sewing thread was made from the sized fibers used in Example 1 that had been served with rayon as described in the Sundet patent. This sewing thread was placed in the furnace and heated in a $N_2$ atmosphere on the same temperature cycle as Example 1. The resulting carbonized sewing thread was compared to sewing thread made in the same way except being heated in air to 700°C (Control-5). Test results are in Table IV.

Table IV

|  | Breaking Strength | Knot Breaking Strength |
|---|---|---|
|  | (ASTM D-2256) | (ASTM D-2256) |
| Sewing Thread of | (N) | (N) |
| Example 5 | 108 | 26.1 |
| Control-5 | 50 | 14.8 |

Because of the uniform coating of elemental carbon on each of its fibers, the novel ceramic textile can

6

be fabricated into a variety of articles such as high-temperature mittens or gloves, fire-barrier curtains, thermal-protection blankets, and high-temperature filter bags. The novel ceramic textile can also be used to reinforce ceramic matrix composites. Even though exposure of such articles to very high temperatures will oxidize the carbon coating, the primary importance of that coating is to permit the novel ceramic textile to be fabricated into such articles.

An important advantage of ceramic textiles of the invention is that when they are exposed to very high temperatures in use, no noxious fumes or odors are evolved.

**Claims**

1. A textile comprising ceramic fibers (10), each fiber (10) having a uniform coating of elemental carbon that is substantially free from metal.

2. The textile defined in claim 1 wherein the weight of the elemental carbon is from 0.25 to 0.4% that of the ceramic fibers.

3. The textile defined in claim 1 wherein most of the individual fibers (10) are 5-20 $\mu$m in diameter.

4. The textile defined in claim 1 in the form of a fabric of woven yarns, each yarn comprising at least two intertwisted rovings, each of which contains several hundred fibers (10).

5. A high-temperature mitten or glove having an outer shell of the fabric defined in claim 4.

6. The textile defined in claim 1 in the form of a sewing thread.

7. Method of making a ceramic textile, said method comprising the sequential steps of
   a) continuously spinning ceramic fibers (10) from an organosol (12),
   b) firing (14) the fibers (10),
   c) promptly uniformly coating the fibers (10) with a solution of an organic lubricious sizing material (18) which is substantially free from metal,
   d) drying (20,21) the coating (18) to leave a lubricious sizing,
   e) converting the sized fibers into a textile, and
   f) heating the textile in an inert atmosphere to decompose the organic size (18) to leave a uniform coating of elemental carbon on each fiber (10).

8. Method as defined in claim 7 wherein the organosol (12) comprises a mixture containing precursors of $Al_2O_3$, $B_2O_3$, and $SiO_2$.

9. Method as defined in claim 8 wherein the organosol (12) after being fired has an alumina:boria mol ratio of from 9:2 to 6:3 and contains up to 65 weight percent silica.

10. Method as defined in claim 9 wherein the organosol (12) after being fired contains from 20 to 50 weight percent silica.

11. Method as defined in claim 7 wherein the amount of organic sizing material (18) that is applied in step c) provides a dry coating which is 2-3% of the weight of the ceramic fibers (10).

12. Method as defined in claim 7 and comprising subsequent to step f) the added step of applying additional metal-free organic material to the textile.

13. Method as defined in claim 12 wherein the step of applying additional metal-free organic material is carried out prior to the step f) of heating in an inert atmosphere.

14. Method as defined in claim 12 wherein the step of applying additional metal-free organic material is carried out following step f), after which is an another step of heating in an inert atmosphere to drive off organic matter from said additional organic material, thus leaving an additional coating of elemental carbon on the fibers.

15. Method as defined in claim 7 wherein the inert atmosphere for step f) comprises nitrogen.

16. Method as defined in claim 15 wherein the sized textile is heated in step f) to a temperature within the range of from 600 to 800° C.

## DOCUMENTS CONSIDERED TO BE RELEVANT

EP 90302876.9

| Category | Citation of document with indication, where appropriate, of relevant passages | Relevant to claim | CLASSIFICATION OF THE APPLICATION (Int Cl⁵) |
|---|---|---|---|
| D,X | US − A − 4 752 504 (RICKBORN) <br> * Claims; column 3, line 29; fig. 1 * | 1,4,7, 8 | D 06 M 11/73 <br> C 04 B 41/81 <br> C 03 C 25/02 <br> D 02 G 3/16 <br> A 62 B 17/00 |
| D,Y | US − A − 4 430 851 (SUNDET) <br> * Claims 1-3,8,17-20; column 3, line 52 − column 4, line 7 * | 1,4, 6-11 | A 41 D 13/10 <br> D 01 F 9/10 <br> C 04 B 35/14 |
| X | DE − A1 − 3 339 756 (SIGRI ELEKTROGRAPHIT) <br> * Claims 1-6; page 5, lines 12-21; page 6, lines 13-24; page 7, lines 19-26; page 8, lines 23-37 * | 1,4,5, 7 | |

TECHNICAL FIELDS
SEARCHED (Int Cl⁵)

D 06 M
C 04 B
A 41 D
C 03 C
A 62 B
B 32 B
D 02 G
D 01 F

The present search report has been drawn up for all claims

| Place of search | Date of completion of the search | Examiner |
|---|---|---|
| VIENNA | 16-07-1990 | SCHÄFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82